# EUROPEAN PATENT APPLICATION

(11) **EP 2 306 655 A2**
(43) Date of publication of application: **06.04.2011**
(21) Application number: 10175075.0
(22) Date of filing: 02.09.2010
(51) Int. Cl.: H04B 1/38, H04M 1/02

(54) **Wireless communication device**

(30) Priority: 30.09.2009 JP 2009227688
(71) Applicant: SMK Corporation, Tokyo 142-8511 (JP)
(72) Inventor: Ogura, Keiichi, Tokyo 142-8511 (JP); Kondo, Haruhiko, Tokyo 142-8511 (JP)
(74) Representative: Sajda, Wolf E.

(57) **Abstract**

A wireless communication device has an antenna element (18) accommodating a wide frequency range with a high gain while satisfying the needs for a smaller size and a smaller thickness. In the wireless communication device (10), an upper case (11) of a generally rectangular parallelepiped shape has the antenna element (18) formed in a sheet shape on a top panel (14) which is the largest face of the rectangular parallelepiped. A lower case (12) of a generally rectangular parallelepiped shape has therein a substrate (13) with a connector (22) for connecting with a mobile device and a communication electronic component formed thereon. The upper case (11) and the lower case (12) are connected with each other by means of a connecting member (23) allowing an attitude of the upper case (11) to be varied with respect to the lower case (12). The wireless communication device (10) further has a cable (21) connecting the antenna element (18) with the substrate (13). The cable (21) is passed through inside the connecting member (23). The upper case (11) is attached to the lower case (12) so that the attitude of the upper case (11) can be varied with respect to the lower case (12).

## Description

### Technical Field

The present invention relates to a wireless communication device having an antenna element accommodating a wide frequency band with a high gain while satisfying the needs for a smaller size and a smaller thickness.

### Background Art

In recent years, the IEEE 802.16e standard, i.e., the WiMAX communication, has been increasingly used as a standard for performing the Internet communication in a mobile device such as a computer. The WiMAX communication is performed while a wireless communication device (dongle) having an IC substrate, an antenna, and the like, provided therein is connected to a mobile device.

An example of such a wireless communication device is the one described in Patent Document 1. The dongle described in Patent Document 1 is directed to a dongle used for the access of a guest device to a wireless home network, and includes a memory and a processing unit that are connected to the guest device using an antenna and a configuration free interface. The access of the guest device is realized via this dongle.

### Summary of Invention

### Technical Problem

A dipole antenna is a type of an antenna for performing a wireless communication in the above-described wireless communication device (dongle). In the dipole antenna, an antenna element needs to be formed with a total width of 1/2 wavelength with each element having a 1/4 wavelength width according to the communication frequency. Therefore, it can be said that this is an antenna requiring a relatively large area.

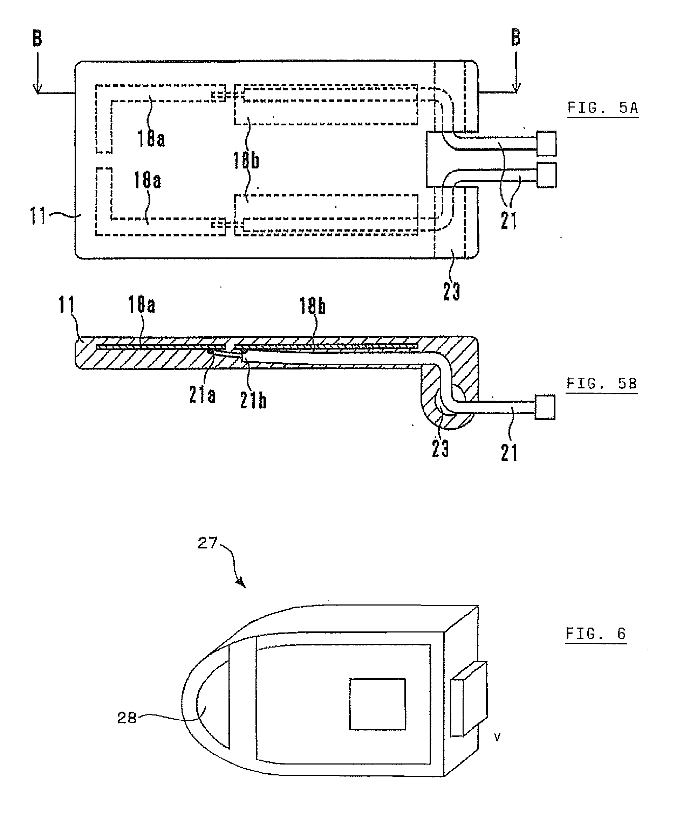

In a conventional wireless communication device, however, an antenna element 28 is provided at an end of a dongle body 27 as shown in FIG. 6, thus reducing the effective area thereof. In order to increase the effective area of the antenna element 28 provided at the end of the dongle body 27, it is necessary to increase the size of the dongle body 27, thus failing to satisfy the needs for a smaller size. Such an antenna structure with a small effective area can be used for making a product dedicated to a particular frequency. However, in order to make a product accommodating a wide frequency band, the shape of the antenna element needs to be improved, thereby arising a need for some extra area.

### Solution to Problem

The present invention has been made in view of the problems described above, and it is therefore an object of the present invention to provide a wireless communication device having an antenna element accommodating a wide frequency band with a high gain while satisfying the needs for a smaller size and a smaller thickness.

According to a first aspect, the present invention is directed to a wireless communication device, including: an upper case having a top panel and an antenna element formed on the top panel in a sheet shape so as to be generally parallel to the top panel; a lower case having therein a substrate with a connector for connecting with a mobile device and a communication electronic component formed thereon; a connecting member for connecting the upper case with the lower case, the connecting member allowing an attitude of the upper case to be varied with respect to the lower case; and a cable for connecting the antenna element with the substrate, the cable being allowed to pass through inside the connecting member, with the upper case being attached to the lower case so that the attitude of the upper case can be varied with respect to the lower case.

According to a second aspect, the present invention is directed to a wireless communication device, including an upper case of a generally rectangular parallelepiped shape having a top panel and an antenna element formed in a sheet shape on the top panel, the top panel being the largest face of the rectangular parallelepiped, so that the antenna element is generally parallel to the top panel; a lower case of a generally rectangular parallelepiped shape having therein a substrate with a connector for connecting with a mobile device and a communication electronic component formed thereon; a connecting member for connecting the upper case with the lower case, the connecting member allowing an attitude of the upper case to be varied with respect to the lower case; and a cable for connecting the antenna element with the substrate, the cable being allowed to pass through inside the connecting member, with the upper case being attached to the lower case so that the attitude of the upper case can be varied with respect to the lower case,

According to a third aspect, the present invention is directed to the wireless communication device, wherein the antenna element is formed in a sheet shape generally across an entire outer surface of the top panel.

According to a fourth aspect, the present invention is directed to the wireless communication device, wherein the antenna element is formed in a sheet shape generally across an entire inner surface of the top panel.

According to a fifth aspect, the present invention is directed to the wireless communication device, wherein the antenna element is provided as a flexible printed circuit with the antenna element formed thereon, the flexible printed circuit being bonded to the upper case.

According to a sixth aspect, the present invention is directed to the wireless communication device, therein the connecting member has a hinge structure.

According to a seventh aspect, the present invention is directed to the wireless communication device, wherein the connecting member allows the upper case to be displaced with respect to the lower case by bending and/or stretching/contracting with respect to an axis in a direction extending from the lower case to the upper case.

According to an eighth aspect, the present invention is directed to the wireless communication device, wherein the connecting member allows a displacement of the upper case to be maintained by holding the upper case with respect to the lower case so that an angle and/or a distance between the upper case and the lower case can be adjusted.

According to a ninth aspect, the present invention is directed to the wireless communication device, wherein the antenna element is integrally molded with the upper case so that the antenna element is arranged on each of an inner side and an outer side of the top panel of the upper case.

According to a tenth aspect, the present invention is directed to the wireless communication device, wherein the upper case is of a plate shape, and the antenna element is integrally molded with the upper case so that the antenna element is contained in the upper case.

According to an eleventh aspect, the present invention is directed to the wireless communication device, wherein the antenna element includes an antenna element ground portion and an antenna element portion with a dielectric layer provided therebetween.

According to a twelfth aspect, the present invention is directed to the wireless communication device, wherein the antenna element is formed by subjecting the top panel of the upper case to a plating process.

According to a thirteenth aspect, the present invention is directed to the wireless communication device, wherein the antenna element is formed by a plating process, and the antenna element is formed also on a side panel by extending a portion thereof to reach an outer surface of the side panel from an outer surface of the top panel.

According to a fourteenth aspect, the present invention is directed to the wireless communication device, wherein the antenna element is formed by a plating process, and the antenna element is formed also on a side panel by extending a portion thereof to reach an inner surface of the side panel from an inner surface of the top panel.

### Advantageous Effects of Invention

In accordance with any one of the first to fourth aspects, an upper case has an antenna element formed on a top panel in a sheet shape so as to be generally parallel to the top panel, and is attached to a lower case by means of a connecting member, allowing an attitude of the upper case to be varied with respect to the lower case.

This configuration can provide a wireless communication device with an antenna element having a large effective area and accommodating a wide frequency band with a high gain while satisfying the needs for a smaller size and a smaller thickness. Accordingly, it is possible to adjust and set the angle of the upper case for the best reception.

In accordance with the fifth aspect, the antenna element is provided by bonding, to the upper case, a flexible printed circuit with an antenna element formed thereon. Thus, even when the upper case has the top panel of a curved shape, for example, the flexible printed circuit with the antenna element formed thereon can be bonded while being curved, thereby increasing the degree of freedom in design.

In accordance with the sixth aspect, since the connecting member has a hinge structure, the angle of the upper case can be adjusted and set for the best reception by using the hinge structure as an axis of rotation.

In accordance with the seventh aspect, the connecting member allows the upper case to be displaced with respect to the lower case by bending and/or stretching/contracting with respect to an axis in a direction extending from the lower case to the upper case. Thus, the displacement of the upper case can be adjusted so as to set the angle and position of the upper case for the best reception.

In accordance with the eighth aspect, the connecting member allows a displacement of the upper case to be maintained by holding the upper case with respect to the lower case so that an angle and/or a distance between the upper case and the lower case can be adjusted. Thus, it becomes possible to set the upper case at the best position for the best reception by adjusting the angle and/or the distance between the upper case and the lower case.

In accordance with the ninth aspect, the antenna element is integrally molded with the upper case so that the antenna element is arranged on each of an inner side and an outer side of the top panel of the upper case. Thus, by forming the antenna element portion (not the antenna element ground portion) on the outer side of the top panel, for example, the antenna element portion can be further away from the substrate. Also, the integral molding increases the degree of freedom in the layout.

In accordance with the tenth aspect, the upper case is of a plate shape, and the antenna element is integrally molded with the upper case so that the antenna element is contained in the upper case. Thus, the antenna element is not exposed on the outside.

In accordance with the eleventh aspect, the antenna element includes an antenna element ground portion and an antenna element portion with a dielectric layer provided therebetween. Thus, with the wavelength shortening effect of the dielectric material, it is possible to reduce the effective area necessary for the antenna element and to achieve a further reduction in size as a whole.

In accordance with the twelfth aspect, since the antenna element is formed by subjecting the top panel of the upper case to a plating process, the antenna element can be directly formed on the upper case constituting a housing.

In accordance with the thirteenth aspect, the antenna element is formed by a plating process, and the antenna clement is formed also on a side panel by extending a portion thereof to reach an outer surface of the side panel from an outer surface of the top panel. Thus, the side panel can be also utilized as the effective area of the antenna, thereby allowing for a further reduction in size as a whole.

In accordance with the fourteenth aspect, the antenna element is formed by a plating process, and the antenna element is formed also on a side panel by extending a portion thereof to reach an inner surface of the side panel from an inner surface of the top panel. Thus, the side panel can be also utilized as the effective area of the antenna, thereby allowing for a further reduction in size as a whole.

### Brief Description of Drawings

- FIG. 1: is a perspective view showing a wireless communication device 10 according to Embodiment 1 of the present invention;
- FIG. 2: is a cross-sectional view taken along line A-A of FIG.1 showing the wireless communication device 10 according to Embodiment 1 of the present invention as viewed from a side surface thereof;
- FIG. 3: is a bottom view showing an upper case 11 unassembled, as viewed from an inner side thereof;
- FIG. 4: is a cross-sectional view showing a wireless communication device 10 according to Embodiment 2 of the present invention, as viewed from a side surface thereof (a cross-sectional view where the upper case 11 is cut along line B-B of FIG. 5A);
- FIG. 5A: is a plan view of the upper case 11 showing an example where an antenna element 18 is arranged inside the upper case 11;
- FIG. 5B: is a cross-sectional view taken along line B-B of FIG. 5A; and
- FIG. 6: is a perspective view representing a conventional wireless communication device (dongle).

### Description of Embodiments

According to the present invention, a wireless communication device includes an upper case, a lower case and a connecting member for connecting the upper case with the lower case. The upper case has a generally rectangular parallelepiped shape, and includes an antenna element formed in a sheet shape on a top panel which is the largest face of the rectangular parallelepiped. The lower case has a generally rectangular parallelepiped shape, and includes a substrate with a connector for connecting with a mobile device and a communication electronic component formed thereon.

The connecting member allows an attitude of the upper case to be varied with respect to the lower case. The device further includes a cable connecting the antenna element with the substrate, and the cable is allowed to pass through inside the connecting member. With this configuration, the upper case is attached to the lower case so that the attitude of the upper case can be varied with respect to the lower case. Hereinafter, the wireless communication device of the present invention will be described in detail.

### Embodiment 1

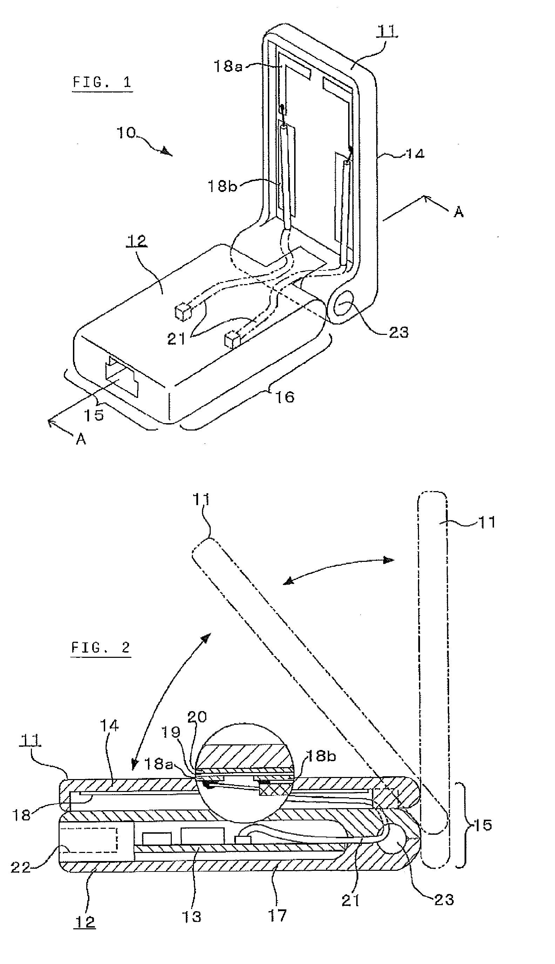

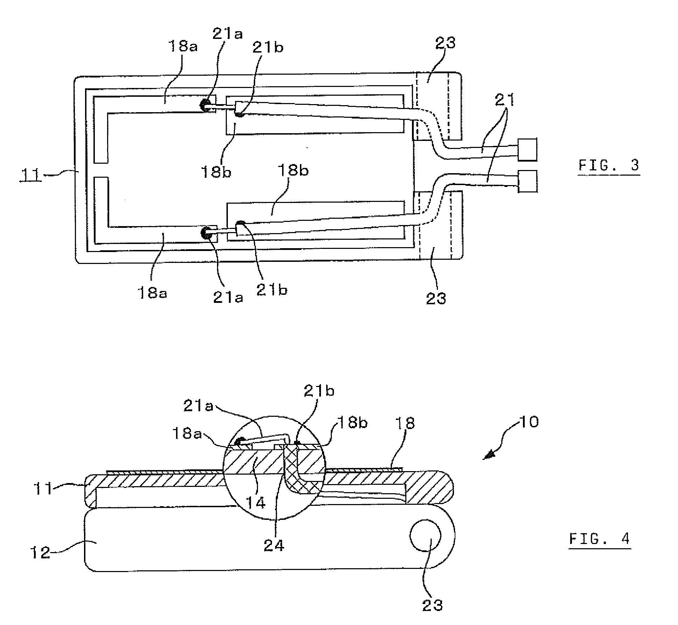

FIG.1 is a perspective view showing a wireless communication device 10 according to Embodiment 1 of the present invention. FIG. 2 is a cross-sectional view showing the wireless communication device 10 as viewed from a side surface thereof, and FIG. 3 is a plan view showing an upper case 11 unassembled, as viewed from an inner side thereof. The upper case 11 shows an example where a case portion also serves as an antenna body including an antenna element.

The wireless communication device 10 of the present invention includes a hollow upper case 11 of a generally rectangular parallelepiped shape with a top panel 14 having the largest face, and a lower case 12 of a rectangular parallelepiped shape with a bottom panel portion 17 having the same area as that of the top panel 14 of the upper case 11. The upper case 11 and the lower case 12 are connected with each other by means of a hinge structure 23 used as a connecting member at one of short side panels 15 so that the upper case 11 can be opened and closed.

As shown in FIG. 2, provided inside the lower case 12 is a substrate 13 including a communication electronic component which enables wireless communications such as WiMAX communication. A connector 22 for connecting with a mobile device is also provided so as to be at the other one of short side panels 15.

As shown in FIGs. 1 to 3, an antenna element 18 is formed in a sheet shape on the inner surface of the top panel 14 of the upper case 11. The upper case 11 and the lower case 12 are formed by molding a resin, and the antenna element 18 is made of a conductive metal, for example. The "antenna element 18" used herein refers to both an antenna element portion 18a and an antenna element ground portion 18b.

In Embodiment 1, the antenna element portion 18a and the antenna element ground portion 18b are first formed on a flexible printed circuit (hereinafter referred to as an "FPC") 19 in a sheet form, and the thus-obtained structure is then bonded to the inner surface of the top panel 14 of the upper case 11 by means of an adhesive 20, as shown in FIG. 2. An antenna cable 21 is connected to the bonded antenna element 18 such that a center conductor 21 a of the antenna cable is soldered to the antenna element portion 18a and a net portion 21 b of the antenna cable is soldered to the antenna element ground portion 18b.

The antenna cable 21 is extended from the substrate 13 to the upper case 11 side through the inside of the hinge structure 23. The antenna cable 21 is passed through the inside of the hinge structure 23 so as to allow for the opening and closing of the upper case 11. Note that the antenna cable 21 may be a flat cable.

For example, the antenna element 18 includes two symmetrically-arranged, L-shaped antenna element portions 18a and two symmetrically-arranged, generally I-shaped antenna element ground portions 18b as shown in FIG. 3. A pair of dipole antennas including the antenna element portion 18a and the antenna element ground portion 18b in such an arrangement performs high-speed communication using the MIMO (Multiple Input Multiple Output) technique, wherein the transmission and reception are performed simultaneously, and a synthesis is performed when receiving, thereby obtaining a wider bandwidth.

Moreover, the formation of the pair of dipole antennas in a sheet shape makes it possible to accommodate a wide frequency band with a high gain, and by forming the arrangement on the top panel 14 having the largest face, it is possible to achieve a smaller size and a smaller thickness.

When used, the wireless communication device 10 is placed on a flat surface with the top panel of the lower case 12 facing downward and the top panel of the upper case I being placed horizontally and facing upward, while a USB cable connected to, for example, a USB terminal of a mobile device is connected to the connector of the wireless communication device 10. Therefore, the antenna element 18 is disposed horizontally when used with the upper case 11 being closed.

As described above, the upper case 11 and the lower case 12 are connected with each other by means of the hinge structure 23 at one of the short side panels 15 so that the upper case 11 including the antenna element 18 formed thereon can be opened and closed. Thus, the angle of the upper case 11 can be adjusted so as to set the angle for the best reception as shown in the two-dot chain lines of FIG. 2.

Note that the upper case 11 can be set at a desired angle by an internal mechanism (not shown) for maintaining the rotational position of the hinge structure 23 disposed inside the hinge structure 23, The internal mechanism prevents the hinge structure from rotating due to the load from the weight of the upper case 11 at the desired angle.

Since the angle of the upper case 11 can be varied stepwise from a closed position (horizontal, 0°) to an open position (vertical, 90°), the antenna element 18 can be gradually varied from a horizontally disposed position to a vertically disposed position, thereby realizing the adjustment function of the antenna sensitivity. Although the antenna element 18 is preferred to be vertical in principle, other cases exist.

For example, when the wireless communication device is influenced by a computer, or the like, which is the access point thereof, the attitude of the antenna element 18 can be suitably varied by means of the hinge structure, thereby improving the antenna performance. Moreover, if the upper case 11 is rotated by an angle greater than 90° so as to slightly lean downward, the antenna element 18 can be positioned further away from the electronic component or the ground provided on the substrate 13 of the lower case 12, thereby, in some cases, further improving the antenna performance (gain).

Even without the above-described internal mechanism for maintaining the rotational position, the upper case 11 can be switched between two positions, i.e., the closed position (horizontal, 0°) and the open position (generally vertical, about 90°), as long as the hinge structure 23 can rotate over an angle of 90° or slightly greater than 90°. Thus, the sensitivity can be adjusted at least between two positions, i.e., when the antenna is positioned horizontally and when the antenna is positioned vertically.

The most favorable position is such that the upper case 11 is vertical so that the antenna element 18 stands vertical. In such a position, one end of the antenna element portion 18a or the antenna element ground portion 18b (a portion of the antenna element between the antenna element portion 18a and the antenna element ground portion 18b that is farthest away from the other) can be positioned high, thereby improving the antenna sensitivity.

Although the top panel 14 is illustrated to have a completely flat surface in FIGs. 1 to 3, the present invention is not limited thereto. By employing a technique in which a sheet of the FPC 19 with the antenna element 18 formed thereon is bonded to the inner side of the top panel 14 of the upper case 11, even when the upper case 11 has the top panel 14 of a curved shape, for example, the sheet of the FPC 19 with the antenna element 18 formed thereon can be bonded while being curved. Thus, the degree of freedom in design is increased.

### Embodiment 2

Although the sheet of the FPC 19 with the antenna element 18 formed thereon is bonded to the inner surface of the top panel 14 of the upper case 11 in Embodiment 1, the sheet of the FPC 19 with the antenna element 18 formed thereon may be bonded to the outer surface of the top panel 14 of the upper case 11 as shown in FIG. 4. Note that since Embodiment 2 is basically the same as Embodiment 1, like elements to those of Embodiment 1 will be denoted by like reference numerals and the description thereof will be omitted.

In Embodiment 2, in order to connect the antenna cable 21 and the antenna element 18 with each other, a through hole 24 is formed running through the upper case 11 and the FPC 19, and the cable 21 is passed therethrough and soldered to the antenna element 18, for example.

By forming the antenna element 18 on the outer side of the top panel 14 of the upper case 11 as in Embodiment 2, the antenna element 18 can be away from the substrate even when the upper case 11 is closed. Thus, the antenna effect is increased.

Although the sheet of the FPC 19 with the antenna element 18 formed thereon is bonded to the inner surface or outer surface of the top panel 14 of the upper case 11 in Embodiment 1 or 2, the present invention is not limited thereto. A part of the antenna element 18 may be buried in, and thus fixed to, the upper case 11. By integrally molding the antenna element 18 and the upper case 11, the antenna element 18 can be disposed on the inner surface or outer surface of the upper case 11 as in the above embodiments.

Also, integral molding makes it possible to form a part of the antenna element 18 on the inner surface of the upper case 11 and the rest on the outer surface of the upper case 11. In this way, both of the inner surface and outer surface of the upper case 11 can be utilized, thereby increasing the degree of freedom in the layout.

Although the upper case 11 is described to have a case shape with the lower surface thereof being opened in the above embodiments, the upper case 11 may be of a boxed shape such that no lower surface opening exists but a hollow exists inside, or may be of a plate shape without a hollow. The antenna element may be formed on the upper surface, inner surface, or inside of the boxed-shape or plate-shape top panel 14, and the upper case may be connected to the lower case by means of the hinge structure 23 so as to be opened and closed as in the above embodiments, thereby obtaining the same effects as those of the above embodiments.

Although the sheet of the FPC 19 with the antenna element 18 formed thereon is bonded to the inner surface or outer surface of the top panel 14 of the upper case 11 in Embodiment 1 or 2, the antenna element 18 may be integrally molded with the upper case 11 such that the antenna element 18 is included inside the upper case 11 as shown in FIGs. 5A and 5B. FIG. 5A is a plan view of the upper case 11 showing an example where the antenna element 18 is disposed inside the upper case 11, and FIG. 5B is a cross-sectional view taken along line B-B of FIG. 5A.

For example, the antenna element portion 18a and the antenna element ground portion 18b may be produced by molding in advance, and then integrally buried in the upper case 11 in the process of molding the upper case 11, with the antenna cable 21 being soldered to the antenna element portion 18a and the antenna element ground portion 18b. In this way, the antenna element 18 and the antenna cable 21 are not exposed at any attitude of the upper case 11.

Note that when it is difficult to complete the integral molding process in a single step, a primary molding process may be performed to give a partially-finished product which is finished in the following secondary molding process.

Moreover, a dielectric layer may be formed between the antenna element portion 18a and the antenna element ground portion 18b. By providing the dielectric layer, the wavelength shortening effect of the dielectric material reduces the effective area necessary for the antenna element 18 and allows for a further reduction in size as a whole.

The antenna element portion 18a and the antenna element ground portion 18b may be formed on the inner side or outer side of the top panel 14 of the upper case 11 by using a plating process. Examples of such a processing method include a plating process with masking and laser plating, for example. Also, the antenna element 18 may be extended and bent to reach the short side panel 15 or a long side panel 16. Then, side panels can be also utilized as the effective area of the antenna, thereby allowing for a further reduction in size as a whole.

Although the upper case 11 and the lower case 12 are connected with each other by means of the hinge structure 23 at the short side panel 15 in the above embodiments, the upper case 11 and the lower case 12 may be connected with each other by means of the hinge structure 23 at the long side panel 16 so that the upper case 11 can be opened and closed.

Although the present invention has been described using a housing of a rectangular parallelepiped shape in the above embodiments, the present invention is not limited thereto. The present invention can be applied also in a cylindrical housing with the top panel 14 of a circular shape, for example. By forming the antenna element 18 on the top panel 14 of the housing having the largest face, it becomes possible to achieve a smaller size and a smaller thickness while accommodating a wide frequency band with a high gain.

The connecting member which connects the upper case 11 and the lower case 12 and maintains a desired attitude is not limited to the hinge structure 23 as in the embodiments described above. For example, the upper case 11 and the lower case 12 may be connected with each other by means of an elastic and bendable bellows hose made of a plastic in which changes in shape can be maintained. In this way, a cable can be passed through a cavity inside the hose, and the bellows hose is allowed to stretch, contract or bend with respect to an axis in a direction of the bellows hose extending from the lower case 11 to the upper case 12.

The distance and the angle between the upper case 11 and the lower case 12 can be thus adjusted, and the attitude of the upper case 12 can be maintained. Since the bellows hose can be stretched or contracted, in this case, the upper case 11 can be, for example, further pulled up from the vertical position so that the antenna element 18 is positioned higher than when the upper case 11 is in the vertical position in Embodiment 1, by the amount of elongation of the bellows hose, thereby further improving the antenna performance.

Note that the cross-section of the hose is not limited to a circular shape, but may be a rectangular shape continuous with the shape of the end portions of the upper case and the lower case. Also, the bellows hose may be formed by piling up and connecting together annular metal members. In such a case, due to the play or sliding between, or the elastic deformation, etc. of, the continuous annular metal members, the bellows hose can be freely bent and held at a bent position.

Another example of the connecting member may be formed with a metal or an insulative resin and include a hollow spherical shaft with a cutout through which a cable is routed, and a bearing having a similar spherical surface covering the shaft on the inner surface thereof and similarly having a cutout through which the cable is routed. In this case, the upper case can be more freely inclined with reference to the shaft, further improving the adjustability.

Moreover, the inner surface of the bearing may be made slightly smaller than the spherical shaft to induce an elastic friction, whereby the attitude of the upper case can be maintained.

### Citation List

### Patent Literature

Patent Document 1: PCT International Application No. 2007-528057

### List of Reference Signs

- 10: wireless communication device
- 11: upper case
- 12: lower case
- 13: substrate
- 14: top panel
- 15: short side panel
- 16: long side panel
- 18: antenna element
- 18a: antenna element portion
- 18b: antenna element ground portion
- 19: flexible printed circuit
- 20: adhesive
- 21: antenna cable
- 21a: center conductor
- 21b: net portion
- 22: connector
- 23: hinge structure
- 24: through hole
- 27: dongle body
- 28: antenna element

## Claims

1. A wireless communication device (10), comprising:
- an upper case (11) having a top panel (14) and an antenna element (18) formed on the top panel (14) in a sheet shape so as to be generally parallel to the top panel (14);
- a lower case (12) having therein a substrate (13) with a connector (22) for connecting with a mobile device and a communication electronic component formed thereon;
- a connecting member (23) for connecting the upper case (11) with the lower case (12), the connecting member (23) allowing an attitude of the upper case (11) to be varied with respect to the lower case (12); and
- a cable (21) for connecting the antenna element (18) with the substrate (13), the cable (21) being allowed to pass through inside the connecting member (23), with the upper case (11) being attached to the lower case (12) so that the attitude of the upper case (11) can be varied with respect to the lower case (12).

2. The device (10) according to claim 1,
**characterized in that** the upper case (11) is of a generally rectangular parallelepiped shape having the top panel (14) and the antenna element (18) formed in a sheet shape on the top panel (14), wherein the top panel (14) is the largest face of the rectangular parallelepiped, so that the antenna element (18) is generally parallel to the top panel (14); and **in that** the lower case (12) is of a generally rectangular parallelepiped shape having therein the substrate (13) with the connector (22) for connecting with a mobile device and a communication electronic component formed thereon.

3. The device (10) according to claim 1 or 2,
**characterized in that** the antenna element (18) is formed in a sheet shape generally across the entire outer surface of the top panel (14).

4. The device (10) according to claim 1 or 2,
**characterized in that** the antenna element (18) is formed in a sheet shape generally across the entire inner surface of the top panel (14).

5. The device (10) according to any one of claims 1 to 4,
**characterized in that** the antenna element (18) is provided as a flexible printed circuit (19) with the antenna element (18) formed thereon, the flexible printed circuit (19) being bonded to the upper case (11).

6. The device (10) according to any one of claims 1 to 5,
**characterized in that** the connecting member (23) has a hinge structure (23).

7. The device (10) according to any one of claims 1 to 5,
**characterized in that** the connecting member (23) is adapted to allow the upper case (11) to be displaced with respect to the lower case (12) by bending and/or stretching/contracting with respect to an axis in a direction extending from the lower case (12) to the upper case (11).

8. The device (10) according to any one of claims 1 to 7,
**characterized in that** the connecting member (23) is adapted to allow a displacement of the upper case (11) to be maintained by holding the upper case (11) with respect to the lower case (12) so that an angle and/or a distance between the upper case (11) and the lower case (12) can be adjusted.

9. The device (10) according to claim 1 or 2,
**characterized in that** the antenna element (18) is integrally molded with the upper case (11) so that the antenna element (18) is arranged on each of an inner side and an outer side of the top panel (14) of the upper case (11).

10. The device (10) according to claim 1 or 2,
**characterized in that** the upper case (11) is of a plate shape, and the antenna element (18) is integrally molded with the upper case (11) so that the antenna element (18) is contained in the upper case (11).

11. The device (10) according to any one of claims 1 to 10,
**characterized in that** the antenna element (18) includes an antenna element portion (18a) and an antenna element ground portion (18b) with a dielectric layer provided therebetween.

12. The device (10) according to any one of claims 1 to 11,
**characterized in that** the antenna element (18) is formed by subjecting the top panel (14) of the upper case (11) to a plating process.

13. The device (10) according to any one of claims 1 to 12,
**characterized in that** the antenna element (18) is formed by a plating process, and the antenna element (18) is formed also on a side panel (15, 16) by extending a portion thereof to reach an outer surface of the side panel (15, 16) from an outer surface of the top panel (14).

14. The device (10) according to any one of claims 1 to 12,
**characterized in that** the antenna element (18) is formed by a plating process, and the antenna element (18) is formed also on a side panel (15, 16) by extending a portion thereof to reach an inner surface of the side panel (15, 16) from an inner surface of the top panel (14).
